# EUROPEAN PATENT APPLICATION

(11) **EP 2 441 935 A1**
(43) Date of publication of application: **18.04.2012**
(21) Application number: 09849174.9
(22) Date of filing: 08.09.2009
(51) Int. Cl.: F01P 3/20, B60H 1/00, F01P 7/16

(54) **COOLING SYSTEM FOR VEHICLE**

(71) Applicant: Toyota Jidosha Kabushiki Kaisha, Toyota-shi, Aichi 471-8571 (JP)
(72) Inventor: KINOMURA, Shigeki, Toyota-shi Aichi 471-8571 (JP); SAITO, Tatsuki, Toyota-shi Aichi 471-8571 (JP); SHINTANI, Osamu, Toyota-shi Aichi 471-8571 (JP)
(74) Representative: Winter, Brandl, Fürniss, Hübner, Röss, Kaiser, Polte - Partnerschaft
(86) International application number: PCT/JP2009/065652
(87) International publication number: WO 2011/030394

(57) **Abstract**

A first coolant circuit circulates coolant through engine, an exhaust heat recovery device recovers exhaust heat of an in-vehicle heat source and heats coolant passing therethrough, a second coolant circuit circulates coolant through the exhaust heat recovery device, and a coolant temperature sensor detects the temperature of the coolant in the engine. The coolant of the first coolant circuit is mixed with the coolant of the second coolant circuit when the temperature detected by the coolant temperature sensor becomes greater than or equal to a semi-warm-up determination value, which is set to a temperature that is lower than a warm-up completion determination value of the engine. Accordingly, when the heat generated by the engine and the heat recovered by the exhaust heat recovery device from the in-vehicle heat source are independently used to increase the temperature of the coolant, control can be executed without any trouble based on the coolant temperature even when mixing the coolant of the engine with the coolant of the exhaust heat recovery device, in which the temperatures have been increased independently.

## Description

### TECHNICAL FIELD

The present invention relates to a cooling apparatus for a vehicle including an exhaust heat recovery device, which recovers exhaust heat of a heat source of the vehicle and heats coolant.

### BACKGROUND ART

Conventionally, a cooling apparatus for a vehicle that includes an exhaust heat recovery device, as mentioned above, and uses recovered heat to enhance the warm-up of an engine or as a heat source of a heater is known in the art. For example, patent document 1 describes a cooling apparatus for a vehicle including an exhaust heat recovery device, which recovers heat of exhaust gas from an engine by performing heat exchange between the exhaust gas of the engine and coolant.

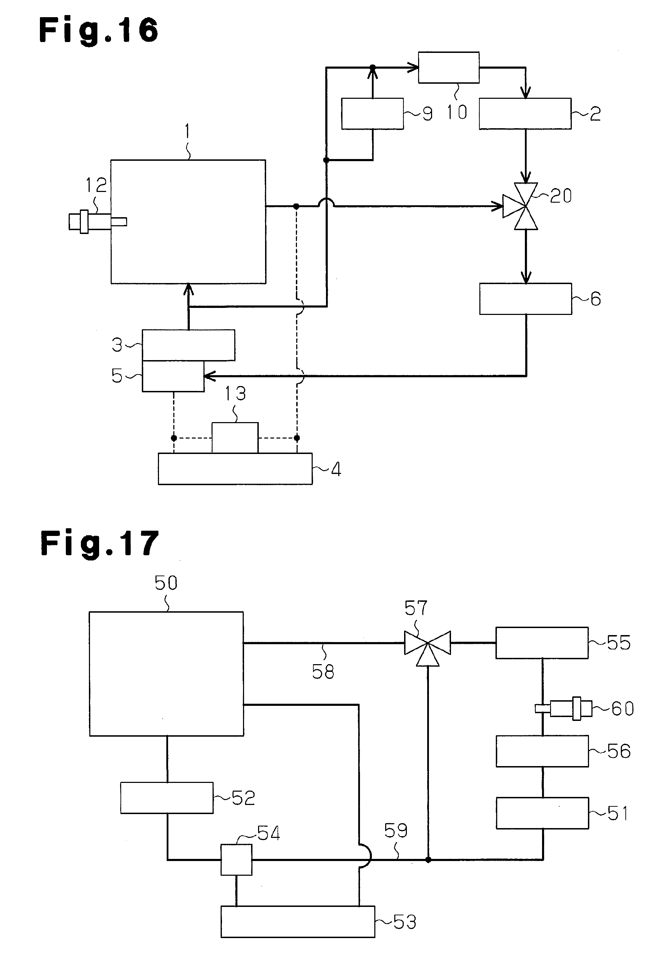

Fig. 17 shows a structure of the cooling apparatus for a vehicle that is described in the document 1. The conventional cooling apparatus for a vehicle mainly includes two coolant circuits, namely, a first coolant circuit, which extends through an engine 50 to circulate coolant, and a second coolant circuit, which extends through an exhaust heat recovery device 51 to circulate coolant.

The first coolant circuit is formed to extend from a first water pump 52, which circulates coolant in the circuit, and through the engine 50, a radiator 53, which radiates heat of the coolant passing through the engine 50, a thermostat 54, which is activated in response to the temperature of the inflowing coolant, and back to the first water pump 52. Further, the second coolant circuit is formed to extend from a second water pump 55, which circulates coolant in the circuit, and through a heater core 56, which heats the air sent into a passenger compartment with the heat of the coolant, the exhaust heat recovery device 51, a three-way valve 57, and back to the second water pump 55. In this case, the first coolant circuit and the second coolant circuit are connected to each other by a coolant channel 58, which connects a downstream side of the engine 50 and the three-way valve 57, and a coolant channel 59, which connects a downstream side of the exhaust heat recovery device 51 and the thermostat 54. Further, the second coolant circuit includes a coolant temperature sensor 60, which detects the temperature of the coolant at the downstream side of the second water pump 55.

In such a conventional cooling apparatus for a vehicle, the thermostat 54 closes when the temperature of the inflowing coolant is low and blocks the flow of coolant through the thermostat 54. Further, the three-way valve 57 is controlled in correspondence to the temperature detected by the coolant temperature sensor 60, connects the exhaust heat recovery device 51 and the second water pump 55 when the detected temperature is low, and connects the engine 50 and the second water pump 55 when the detected temperature is high. The first water pump 52 is also controlled in correspondence to the temperature detected by the coolant temperature sensor 60 and is deactivated when the detected temperature is low.

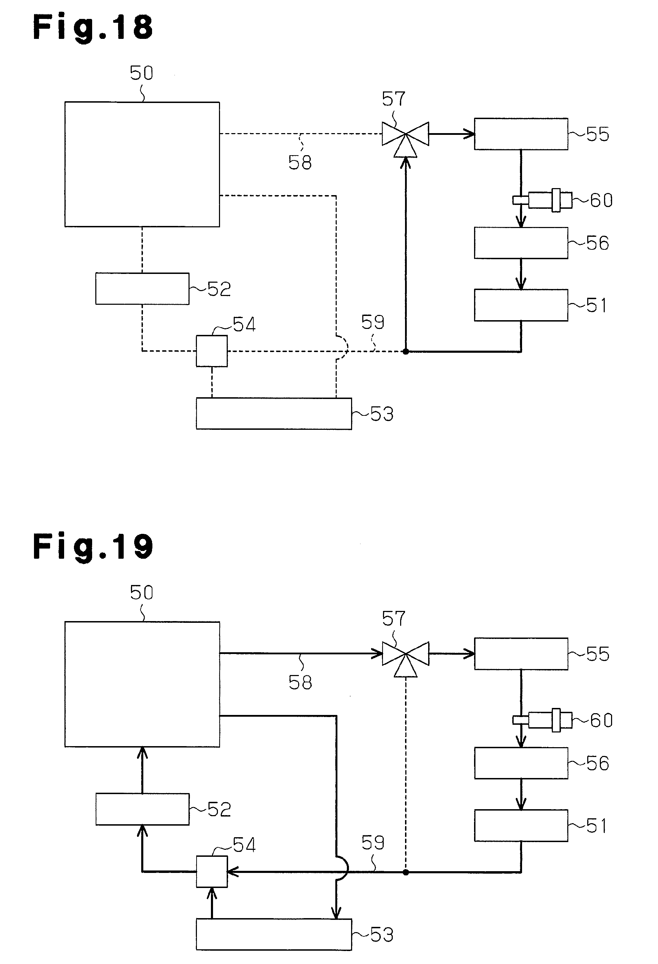

In Fig. 18, a flow of the coolant when the temperature of the coolant in the downstream of the second water pump 55 detected by the coolant temperature sensor 60 is low is shown by an arrow. In this state, the thermostat 54 is closed, and the three-way valve 57 operates to connect the exhaust heat recovery device 51 and the second water pump 55. Thus, in this state, the coolant of the first coolant circuit is separated from the coolant of the second coolant circuit. Further, the first water pump 52 in this state is deactivated, and only the second water pump 55 operates. Thus, in the cooling apparatus of the vehicle in this state, the coolant is circulated only in the second coolant circuit. More specifically, the coolant in this state is circulated to flow from the second water pump 55 to the heater core 56 and the exhaust heat recovery device 51 and back to the second water pump 55. Coolant remains inside the engine 50 in this state without being circulated. This increases the temperature of the coolant and enhances warm-up of the engine 50. Further, if the passenger compartment is being heated in this state, the coolant heated by the heat of the exhaust gas in the exhaust heat recovery device 51 is sent to the heater core 56. Thus, the blown air can be warmed by the heat of the exhaust gas recovered from the exhaust heat recovery device 51.

In Fig. 19, a flow of the coolant when the temperature of the coolant in the downstream of the second water pump 55 detected by the coolant temperature sensor 60 is high is shown by an arrow. The thermostat 54 in this state is open, and the three-way valve 57 operates to connect the engine 50 and the second water pump 55. Further, the first water pump 52 and the second water pump 55 in this state are both activated. Accordingly, in the cooling apparatus of a vehicle in this state, two coolant circulation loops are formed. The first circulation loop is a loop that extends from the first water pump 52, through the engine 50, the radiator 53, and the thermostat 54, and back to the first water pump 52. The second circulation loop is a loop extending away from the first circulation loop after passing through the engine 50, through the second water pump 55, the heater core 56, and the exhaust heat recovery device 51, and joined again with the first circulation loop in the thermostat 54. In this manner, here, the coolant of the first coolant circuit and the coolant of the second coolant circuit are mixed. Thus, if the temperature of the coolant in the second coolant circuit prior to mixing is sufficiently increased by the heat of the exhaust gas in the exhaust heat recovery device 51, the mixing increases the temperature of the coolant flowing into the engine 50 and further enhances the warm-up of the engine 50.

### PRIOR ART DOCUMENT

### PATENT DOCUMENT

Patent Document 1: Japanese Laid-Open Patent Publication No. 2008-208716

### SUMMARY OF THE INVENTION

### PROBLEM TO BE SOLVED BY THE INVENTION

However, in the conventional cooling apparatus for a vehicle described above, the following problem may occur in an engine control after the coolant mixing depending under the circumstance.

The conventional cooling apparatus of the vehicle described above aims to enhance the warm-up of the engine 50 by supplying the engine 50 with the coolant of the second coolant circuit of which temperature has been increased by the heat recovered from the exhaust gas by the exhaust heat recovery device 51. Thus, the temperature of the coolant in the exhaust heat recovery device 51 is checked and when it becomes sufficiently high, the coolant in the engine 50 is mixed with the coolant of the second coolant circuit, which includes the exhaust heat recovery device 51.

However, when the heating of the passenger compartment starts immediately after starting the engine 50, a large amount of heat recovered by the exhaust heat recovery device 51 from the exhaust gas is used to heat the passenger compartment, and the temperature of the coolant in the second coolant circuit hardly rises. In this case, the temperature of the coolant in the engine 50 is increased by the heat generated by the engine 50. In such a case, the temperature of the coolant in the second coolant circuit when coolant mixing occurs is lower than the temperature of the coolant in the engine 50. In this case, the coolant of the second coolant circuit, of which the temperature is lower, flows into the flow of the coolant that circulates through the engine 50 as the mixing of the coolants from both coolant circuits starts. Depending on the mixing, a variation may occur in the temperature distribution of the coolant passing through the engine 50. This increases or decreases the coolant temperature detected by the coolant temperature sensor in the engine 50.

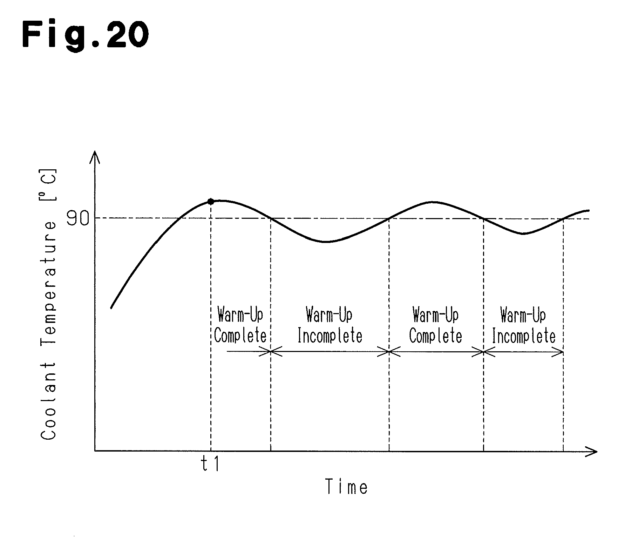

In the engine 50, the contents of many controls are changed depending on whether or not warm-up has been completed. Accordingly, when the detected coolant temperature of the coolant temperature sensor arranged in the engine 50 increases or decreases over a warm-up completion determination value (e.g., 90°C) as shown in Fig. 20 after the coolants of the two coolant circuits are mixed, hunting occurs in the control. More specifically, the prior-warm-up completion control and subsequent-warm-up completion control are alternately and repeatedly performed. In such a manner, in the conventional cooling apparatus for a vehicle, low-temperature coolant is mixed with the coolant of the engine 50, the temperature of which has been sufficiently increased. This may interfere with the controls that are executed based on the coolant temperature.

Nowadays, due to the downsizing of engines resulting from hybrid vehicles or the like, the advantages for using the engine as a heat source has decreased, and the use of exhaust heat recovered from an in-vehicle heat source such as a fuel cell, an inverter, or the like has been studied. The problem described above may also occur in the same manner when using the exhaust heat of an in-vehicle heat source instead of the heat recovered from the engine exhaust gas to increase the coolant temperature. More specifically, when recovering the exhaust heat of the in-vehicle heat source in the coolant circuit, which includes the exhaust heat recovery device, to raise the temperature of the coolant while stopping the circulation of the coolant in the engine, and then mixing the coolant in the engine with the coolant of the coolant circuit including the exhaust heat recovery device, a variation may occur in the temperature distribution in the coolant flowing through the engine. Prior to coolant mixing, this may interfere with control that is based on the coolant temperature.

The same problem may occur regardless of whether or not coolant circulation in the engine is stopped when starting the engine. More specifically, if the temperature of the coolant is increased by the heat recovered by the exhaust heat recovery device, while the temperature of the coolant is increased by the heat generated by the engine, the temperature of the coolant at the engine may be increased faster than the coolant at the exhaust heat recovery device depending on the situation in which the exhaust heat is recovered to the situation in which the recovered heat is used. In this case, a variation occurs in the temperature distribution of the coolant in correspondence with the mixing of the coolants from the engine and the exhaust heat recovery device. This may interfere with control that is based on the coolant temperature.

For a case in which the heat of an engine and the heat recovered from an in-vehicle heat source by an exhaust heat recovery device are independently used to increase the temperature of a coolant, it is an object of the present invention to provide a cooling apparatus for a vehicle that allows a control based on coolant temperature to be executed without any trouble even if coolant from the engine and coolant from the exhaust heat recovery device, the temperatures of which are increased independently, are mixed.

### MEANS FOR SOLVING THE PROBLEM

To achieve the above object, in one aspect of the present invention, a cooling apparatus for a vehicle including an engine and a heat source is provided with a first coolant circuit that extends through the engine and circulates coolant, an exhaust heat recovery device that recovers exhaust heat of the heat source and heats coolant passing therethrough, a second coolant circuit that extends through the exhaust heat recovery device and circulates coolant, and a coolant temperature sensor that detects the temperature of the coolant in the engine. The coolant of the first coolant circuit is mixed with the coolant of the second coolant circuit when the temperature detected by the coolant temperature sensor becomes greater than or equal to a semi-warm-up determination value, which is set to a temperature that is lower than a warm-up completion determination value of the engine.

In the above structure, the coolant in the first coolant circuit increases its temperature in the engine when directly receiving heat from the engine. The coolant in the second coolant circuit increases its temperature when heated by the heat recovered from the in-vehicle heat source by the exhaust heat recovery device. In this case, depending on the recovery conditions of the exhaust heat by the exhaust heat recovery device or the usage conditions of the heat of the coolant flowing through the second coolant circuit, the temperature of the coolant in the first coolant circuit may increase more quickly than the coolant in the second coolant circuit. In particular, when the flow amount of the coolant flowing through the engine is decreased or set to 0 to warm-up the engine at an early stage, the temperature of the coolant in the first coolant circuit often quickly increases. In such a case, in a state in which the temperature of the coolant in the engine exceeds the warm-up completion determination value of the engine, when the coolant of the second coolant circuit having the lower temperature mixes with the coolant of the first coolant circuit, a variation occurs in the temperature distribution of the coolant, and the temperature of the coolant in the engine increases and decreases around the warm-up completion determination value.

In this respect, in the above structure, the coolants of the two coolant circuits are mixed when the temperature of the coolant in the engine becomes greater than or equal to the semi-warm-up determination value, which is set to a temperature that is lower than the warm-up completion determination value of the engine. Thus, even if the coolant of the second coolant circuit, which has the lower temperature, is mixed with the coolant of the first coolant circuit and increases and decreases the temperature of the coolant in the engine, the temperature increase and decrease occurs in a temperature range that is lower than the warm-up completion determination value of the engine. This avoids a situation in which control for before warm-up completion and control for after warm-up completion are repeatedly and alternately executed. Accordingly, in the above structure, when the coolant temperature is increased separately by the heat generated by the engine and the heat recovered by the exhaust heat recovery device from the in-vehicle heat source, control based on the coolant temperature is executed without any trouble even when mixing the coolant from the engine and the coolant from the exhaust heat recovery device, the temperatures of which are separately increased.

To achieve the above object, in a further aspect of the present invention, a cooling apparatus for a vehicle including an engine and a heat source is provided with a first coolant circuit that extends through the engine and circulates coolant, an exhaust heat recovery device that recovers exhaust heat of the heat source and heats coolant passing therethrough, a second coolant circuit that extends through the exhaust heat recovery device and circulates coolant, and a radiator activated to radiate heat from the coolant that passes through the engine when the temperature of the coolant becomes greater than or equal to a specified value, and a coolant temperature sensor that detects the temperature of the coolant in the engine. The coolant of the first coolant circuit is mixed with the coolant of the second coolant circuit when the temperature detected by the coolant temperature sensor becomes greater than or equal to a semi-warm-up determination value, which is set to a temperature that is lower than the temperature at which the radiator is activated.

In the above structure, the coolant temperature is increased separately in the first coolant circuit and the second coolant circuit. Thus, depending on the situation, the temperature of the coolant in the first coolant circuit may increase more quickly than the coolant in the second coolant circuit. In particular, when the flow amount of the coolant passing through the engine is decreased or set to 0 to quickly warm up the engine, the temperature of the coolant in the first coolant circuit often increases more quickly. Further, when the coolant temperature becomes greater than or equal to the specified value, the radiator is activated, and the radiator radiates heat from the coolant passing through the engine. Normally, the radiator is activated upon warm-up completion of the engine. Accordingly, when the coolant of the second coolant circuit, which has a lower temperature, is mixed with the coolant of the first coolant circuit at the point of time in which the temperature of the coolant in the radiator increases to the level that activates the radiator, the temperature of the coolant in the engine increases and decreases around the warm-up completion determination value. This may interfere with control that switches control contents based on whether or not the coolant temperature in the engine is greater than or equal to the warm-up completion determination value.

In this respect, in the above structure, the coolant of the first coolant circuit is mixed with the coolant of the second coolant circuit when the temperature becomes greater than or equal to the semi-warm-up determination value, which is set to a temperature that is lower than the temperature at which the radiator is activated. Thus, even if the coolant of the second coolant circuit, which has a lower temperature, is mixed with the coolant of the first coolant circuit and increases and decreases the temperature of the coolant in the engine, the temperature increase and decrease occurs in a temperature range that is lower than the warm-up completion determination value of the engine. Accordingly, in the above structure, when the coolant temperature is increased separately by the heat generated by the engine and the heat recovered by the exhaust heat recovery device from the in-vehicle heat source, control based on the coolant temperature is executed without any trouble even when mixing the coolant from the engine and the coolant from the exhaust heat recovery, the temperatures of which are separately increased.

When the flow amount of the coolant passing through the engine is decreased or set to 0 until the mixing of the coolants start, the coolant of the first coolant circuit remains in the engine. Thus, the temperature of the coolant of the first coolant circuit increases more quickly than the coolant of the second coolant circuit. As a result, the vehicle coolant apparatus according to the present invention is preferable for application to a cooling apparatus that decreases or sets to 0 the flow amount of the coolant passing through the engine.

To achieve the above object, in another aspect of the present invention, a cooling apparatus for a vehicle including an engine and a heat source is provided with a first coolant circuit that extends through the engine and circulates coolant, an exhaust heat recovery device that recovers exhaust heat of the heat source and heats coolant passing therethrough, a second coolant circuit that extends through the exhaust heat recovery device and circulates coolant, a radiator activated to radiate heat from the coolant that passes through the engine when the temperature of the coolant becomes greater than or equal to a specified value, a bypass passage that circulates coolant bypassing the radiator, a valve that decreases a flow amount of the coolant passing through the engine or sets the flow amount to 0 when closed and mixes the coolant of the first coolant circuit with the coolant of the second coolant circuit when open, and a coolant temperature sensor that detects the temperature of the coolant in the engine. The valve opens when the temperature detected by the coolant temperature sensor becomes greater than or equal to a semi-warm-up determination value, which is set to a temperature that is lower than the temperature at which the radiator is activated.

In the above structure, the coolant temperature is increased separately in the first coolant circuit and the second coolant circuit. Also, in the above structure, by closing the valve, the flow amount of the coolant passing through the engine is decreased or set to 0 to quickly warm up the engine so that the engine is warmed up more quickly. If the valve is closed in such a manner when starting the engine, the temperature of the coolant in the engine quickly increases. Thus, the temperature of the coolant of the first coolant circuit increases more quickly than the coolant of the second coolant circuit. Further, in the above structure, when the coolant temperature becomes greater than or equal to the specified value, the radiator is activated, and the radiator radiates heat from the coolant passing through the engine. Normally, the radiator is activated upon warm-up completion of the engine. Accordingly, when the coolant of the second coolant circuit, which has a lower temperature, is mixed with the coolant of the first coolant circuit at the point of time in which the temperature of the coolant in the radiator increases to the level that activates the radiator, the temperature of the coolant in the engine increases and decreases around the warm-up completion determination value. This may interfere with control that switches control contents based on whether or not the coolant temperature in the engine is greater than or equal to the warm-up completion determination value.

In this respect, in the above structure, the valve opens when the temperature detected by the coolant temperature sensor, which detects the temperature of the coolant in the engine, becomes greater than or equal to the semi-warm-up determination value, which is set to a temperature that is lower than the temperature at which the radiator is activated. Thus, even if the coolant of the second coolant circuit, which has a lower temperature, is mixed with the coolant of the first coolant circuit and increases and decreases the temperature of the coolant in the engine, the temperature increase and decrease occurs in a temperature range that is lower than the warm-up completion determination value of the engine. Accordingly, in the above structure, when the coolant temperature is increased separately by the heat generated by the engine and the heat recovered by the exhaust heat recovery device from the in-vehicle heat source, control based on the coolant temperature is executed without any trouble even when mixing the coolant from the engine and the coolant from the exhaust heat recovery, the temperatures of which are separately increased.

As described above, each aspect of the vehicle cooling apparatus according to the present invention includes two coolant circuits, each of which increases the temperature of the coolant. The temperatures of the coolant in the two coolant circuits may deviate from each other. For such a case, two coolant temperature sensors are provided, namely, a first coolant temperature sensor that detects the temperature of the coolant in the first coolant circuit and a second coolant temperature sensor that detects the temperature of the coolant in the second coolant circuit.
This allows for recognition of the coolant temperature in each coolant circuit and allows execution of control in a preferable manner. For example, based on the detection result of the second coolant temperature sensor, control of a heater blower and control for avoiding boiling of the coolant in the exhaust heat recovery device can be executed in a preferable manner.

Further, in such a case, the temperature detected by the second coolant temperature sensor may be used to determine whether or not to mix the coolant of the first coolant circuit with the coolant of the second coolant circuit. As one specific example, the coolant of the first coolant circuit may be mixed with the coolant of the second coolant circuit when at least one of three conditions is satisfied, which are the temperature detected by the second coolant temperature sensor being greater than or equal to the semi-warm-up determination value, the temperature detected by the second coolant temperature sensor being sufficiently higher than the temperature of the coolant in the engine, and the temperature detected by the second coolant temperature sensor being lower than the temperature required by a heat utilizing device, which utilizes the heat of the coolant.

To achieve the above object, in a further aspect of the present invention, a cooling apparatus for a vehicle including an engine and a heat source is provided with a first coolant circuit that extends through the engine and circulates coolant, a heater core heating that heats air, which is sent into a passenger compartment, with heat of coolant flowing therethrough, an exhaust heat recovery device that recovers exhaust heat of the heat source and heats coolant passing therethrough, a second coolant circuit that extends through the heater core and the exhaust heat recovery device and circulates coolant, a radiator activated to radiate heat from the coolant that passes through the engine when the temperature of the coolant becomes greater than or equal to a specified value, a bypass passage that sends the coolant that has passed through the engine to the heater core bypassing the radiator, a valve arranged in the bypass passage, wherein the valve blocks the flow of the coolant through the bypass passage when closed and allows the flow of the coolant through the bypass passage when open, a coolant temperature sensor that detects the temperature of the coolant in the engine, and an engine cooling control unit that requests the valve to close when the temperature detected by the coolant temperature sensor is less than a semi-warm-up determination value, which is set to a temperature that is lower than the temperature at which the radiator is activated, and requests the valve to open when the temperature detected by the coolant temperature sensor is greater than or equal to the semi-warm-up determination value.

In the above structure, the coolant temperature is increased separately in the first coolant circuit and the second coolant circuit. Thus, in the above structure, by closing the valve, the flow amount of the coolant passing through the engine is decreased or set to 0 to quickly warm up the engine so that the engine is warmed up more quickly. If the valve is closed in such a manner when starting the engine, the temperature of the coolant in the engine quickly increases. Thus, the temperature of the coolant of the first coolant circuit increases more quickly. Further, in the above structure, the coolant of which the temperature has been increased by the exhaust heat recovery device is sent to the heater core. Thus, when the heat recovered by heat exhaust heat recovery device is used by the heater, the temperature increase of the coolant in the second coolant circuit is delayed. Thus, the temperature of the coolant of the first coolant circuit often increases more quickly than the coolant of the second coolant circuit.

Further, in the above structure, when the coolant temperature becomes greater than or equal to the specified value, the radiator is activated, and the radiator radiates heat from the coolant passing through the engine. Normally, the radiator is activated upon warm-up completion of the engine. Accordingly, when the coolant of the second coolant circuit, which has a lower temperature, is mixed with the coolant of the first coolant circuit at the point of time in which the temperature of the coolant in the radiator increases to the level that activates the radiator, the temperature of the coolant in the engine increases and decreases around the warm-up completion determination value. This may interfere with control that switches control contents based on whether or not the coolant temperature in the engine is greater than or equal to the warm-up completion determination value.

In this respect, in the above structure, the valve opens when the temperature detected by the coolant temperature sensor, which detects the temperature of the coolant in the engine, is greater than or equal to the semi-warm-up determination value to mix the coolant of the first coolant circuit with the coolant of the second coolant circuit. Thus, even if the coolant of the second coolant circuit, which has a lower temperature, is mixed with the coolant of the first coolant circuit and increases and decreases the temperature of the coolant in the engine, the temperature increase and decrease occurs in a temperature range that is lower than the warm-up completion determination value of the engine. Accordingly, in the above structure, when the coolant temperature is increased separately by the heat generated by the engine and the heat recovered by the exhaust heat recovery device from the in-vehicle heat source, control based on the coolant temperature is executed without any trouble even when mixing the coolant from the engine and the coolant from the exhaust heat recovery, the temperatures of which are separately increased.

As described above, each aspect of the vehicle cooling apparatus according to the present invention includes two coolant circuits, each of which increases the temperature of the coolant. The temperatures of the coolant in the two coolant circuits may deviate from each other. For such a case, two coolant temperature sensors are provided, namely, a first coolant temperature sensor that detects the temperature of the coolant in the first coolant circuit and a second coolant temperature sensor that detects the temperature of the coolant in the second coolant circuit. This allows for recognition of the coolant temperature in each coolant circuit and allows execution of control in a preferable manner. For example, based on the detection result of the second coolant temperature sensor, control of a heater blower and control for avoiding boiling of the coolant in the exhaust heat recovery device can be executed in a preferable manner.

Further, the vehicle cooling apparatus formed as described above may include an air conditioning control unit that controls heating of the air in the heater core and blowing of the heated air into the passenger compartment. The valve is closed only when the air conditioning control unit and the engine cooling control unit both request the valve to close. In this case, the requests of air conditioning control and engine cooling control are both reflected on the route selection of the coolant. In such a case, the air conditioning control unit is configured to request the valve to close when all three conditions are unsatisfied, which are the temperature detected by the second coolant temperature sensor being greater than or equal to the semi-warm-up determination value, the temperature detected by the second coolant temperature sensor being sufficiently higher than the temperature of the coolant in the engine, and the temperature detected by the second coolant temperature sensor being lower than the temperature required by the heater core.

### BRIEF DESCRIPTION OF THE DRAWINGS

Fig. 1 is a schematic block diagram entirely showing the structure of a cooling apparatus for a vehicle according to a first embodiment of the present invention;
Fig. 2 is a table showing operational conditions of engine coolant circulation, a valve, and a thermostat in correspondence with a warm-up state of an engine in the vehicle cooling apparatus of the present embodiment;
Fig. 3 is a block diagram showing the flow of coolant when the engine is cold in the vehicle cooling apparatus of the present embodiment;
Fig. 4 is a block diagram showing the flow of coolant when the engine is semi-warmed up in the vehicle cooling apparatus of the present embodiment;
Fig. 5 is a graph showing the transition of the coolant temperature in the engine before and after a valve opens in the vehicle cooling apparatus of the present embodiment;
Fig. 6 is a schematic block diagram entirely showing the structure of a cooling apparatus for a vehicle according to a second embodiment of the present invention;
Fig. 7 is a table showing an example of setting conditions for a flow amount distribution factor map which is employed in the present embodiment;
Fig. 8 is a flowchart showing the procedures for processing a pump flow amount calculation routine employed in the present embodiment;
Fig. 9 is a flowchart showing the procedures for processing a valve opening and closing control routine employed in the present embodiment;
Fig. 10 is a flowchart showing the procedures for processing a valve opening and closing request routine in an engine cooling control unit employed in the present embodiment;
Fig. 11 is a flowchart showing the procedures for processing a valve opening and closing request routine in an air conditioning control unit employed in the present embodiment;
Fig. 12 is a graph showing operational conditions of a valve when a heater is deactivated in the present embodiment;
Fig. 13 is a graph showing operational conditions of the valve when the heater is activated in the present embodiment;
Fig. 14 is a schematic block diagram showing the structure of a coolant circuit in a cooling apparatus for a vehicle according to a third embodiment of the present invention;
Fig. 15 is a block diagram showing the flow of coolant when the engine is cold in the vehicle cooling apparatus of the present embodiment;
Fig. 16 is a block diagram showing the flow of coolant when the engine is semi-warmed up in the vehicle cooling apparatus of the present embodiment;
Fig. 17 is a schematic block diagram showing the structure of a coolant circuit in a conventional cooling apparatus for a vehicle;
Fig. 18 is a block diagram showing the flow of coolant when the coolant temperature is low in the conventional vehicle cooling apparatus;
Fig. 19 is a block diagram showing the flow of coolant when the coolant temperature is high in the conventional vehicle cooling apparatus; and
Fig. 20 is a graph showing the transition of the coolant temperature prior to and subsequent to the mixing of coolants in the conventional vehicle cooling apparatus.

### MODE FOR CARRYING OUT THE INVENTION

### First Embodiment

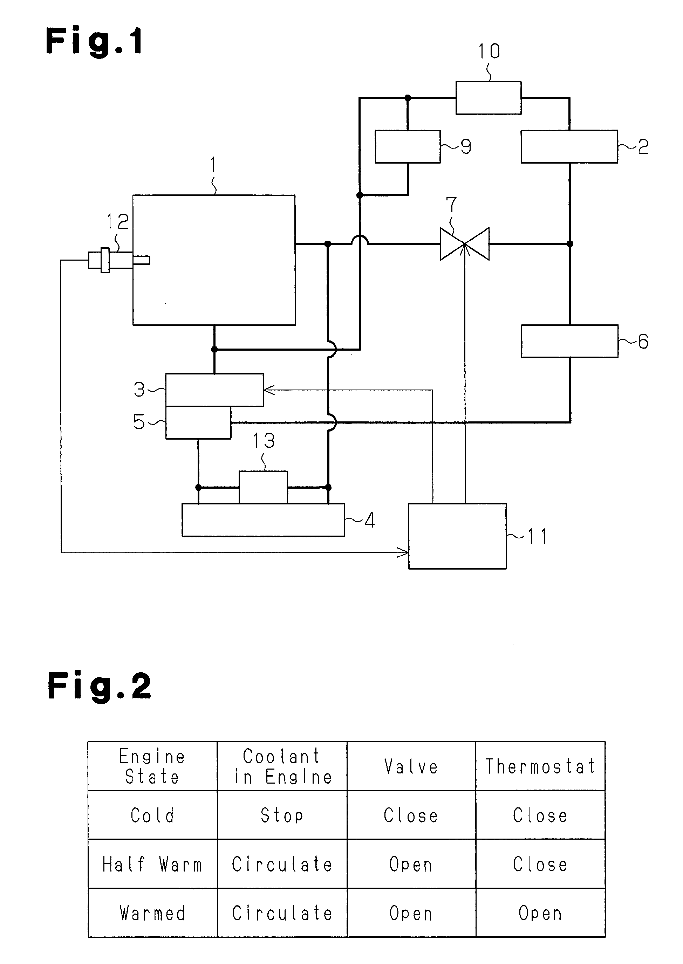

A cooling apparatus for a vehicle in accordance with a first embodiment of the present invention will now be described with reference to Figs. 1 to 5.

Fig. 1 shows a structure of a coolant circuit of a cooling apparatus for a vehicle in accordance with the present embodiment. The coolant circuit shown in the drawing mainly includes two coolant circuits, which will now be described. The cooling apparatus of the vehicle includes a first coolant circuit, which extends through an engine 1 and circulates coolant, and a second coolant circuit, which extends through an exhaust heat recovery device 2 and circulates coolant. In this case, the coolant circuits both share a water pump 3 that circulates the coolant. The water pump 3 is a motor-driven pump and varies a flow amount of the discharged coolant based on an external command.

The first coolant circuit extends from the water pump 3 into the engine 1 and then separates into a main route, which extends through a radiator 4 that radiates heat of the coolant into the ambient air, and a bypass route, which bypasses the radiator 4. In the main route, the coolant that flows through the engine 1 comes back to the water pump 3 after flowing through the radiator 4 and a thermostat 5. The thermostat 5, which is a temperature sensing type valve, opens when the temperature of the coolant passing through a heater core 6, which will be described later, is greater than or equal to a specified value (e.g., 90°C) thereby allowing circulation of the coolant through the radiator 4. Further, the thermostat 5 closes when the temperature of the coolant that has passed through the heater core 6 is less than the specified value thereby stopping the circulation of the coolant through the radiator 4. In other words, in the cooling apparatus of the vehicle, when the temperature of the coolant flowing into the thermostat 5 becomes greater than or equal to the specified value, the radiator 4 is activated to radiate the heat of the coolant passing through the engine 1. A reservoir tank 13, which contains surplus coolant, is arranged in the vicinity of the radiator 4.

Further, from the engine 1, the bypass route in the first coolant circuit extends through a valve 7, which is formed as an electromagnetic type ON-OFF valve, the heater core 6, the thermostat 5, and then back to the water pump 3. The heater core 6 is a heat exchanger that warms the air sent into a passenger compartment by exchanging heat between air and coolant. The heater core 6 is also a heat utilizing device that utilizes the heat recovered from the exhaust gas by the exhaust heat recovery device 2.

The thermostat 5 is formed to normally allow coolant circulation through the bypass route mentioned. Further, coolant circulation through the bypass route stops when the valve 7 closes. Accordingly, when the valve 7 and the thermostat 5 are both closed, coolant circulation through the engine 1 is stopped.

The second coolant circuit separates from the water pump 3 into two routes, namely, a route that passes through a throttle body 9 of the engine 1 and a route that does not pass through the throttle body 9. The two routes are joined again with each other and then extend through an EGR cooler 10, which cools the exhaust re-circulated from an exhaust system to an intake system of the engine (recirculation exhaust gas), and the exhaust heat recovery device 2 before joining the bypass route at upstream side of the heater core 6. The exhaust heat recovery device 2 is a heat exchanger that exchanges heat between the exhaust gas and the coolant and heats the coolant with the heat of the exhaust gas.

An engine cooling control unit 11 controls the flow amount of the coolant discharged from the water pump 3 (hereinafter, refer to as a pump flow amount) in the vehicle cooling apparatus and the opening and closing of the valve 7. The engine cooling control unit 11 is an electronic control unit including a CPU, which executes various computing processes in accordance with the cooling control of the engine 1, a ROM, which stores control programs and data, a RAM, which temporarily stores computation results of the CPU, detection results of the sensors and the like, and an I/O, which inputs and outputs signal to and from an external device. The engine cooling control unit 11 receives the detection signal of a coolant temperature sensor 12, which detecting a coolant temperature thw1 in the engine 1.

In the vehicle cooling apparatus of the present embodiment, the engine cooling control unit 11 closes the valve 7 when the engine 1 is cold. The thermostat 5 is closed in this state. Thus, the circulation of coolant through the engine 1 is stopped. Further, in this manner, in the vehicle cooling apparatus of the present embodiment, coolant remains in the engine 1 to enhance temperature increase of coolant in the engine 1. This advances the warm-up of the engine 1.

However, in this state, coolant is circulated only in the second coolant circuit. In other words, coolant is circulated from the water pump 3 and through the throttle body 9, the EGR cooler 10, the exhaust heat recovery device 2, the heater core 6, and the thermostat 5. The heat recovered from the exhaust gas by the EGR cooler 10 and the exhaust heat recovery device 2 increases the temperature of the coolant in the second coolant circuit. Here, if the heater is activated in the passenger compartment, the air sent into the passenger compartment is warmed by the heat recovered from the exhaust gas by the EGR cooler 10 and the exhaust heat recovery device 2. In this case, most of the recovered heat is used for the heater. This delays the temperature increase of the coolant. In such a case, the temperature of coolant in the engine 1 increases earlier than the temperature of the coolant of the second coolant circuit. If the coolant of the second coolant circuit is mixed with the coolant of the first coolant circuit in a state in which the temperature of the coolant in the engine 1 is higher than a value for determining warm-up completion of the engine 1 (e.g., 90°C), the temperature of the coolant in the engine 1 varies around the warm-up completion determination value. This may interfere with controls executed to change its control contents based on whether or not the coolant temperature in the engine 1 is greater than or equal to the warm-up completion determination value.

Accordingly, in the vehicle cooling apparatus of the present embodiment, the coolants in the two coolant circuits are mixed by opening the valve 7 when the temperature of the coolant in the engine 1 becomes greater than or equal to a semi-warm-up determination value set to a temperature (for example, 70°C) that is lower than the warm-up completion determination value of the engine 1. Accordingly, even when the temperature of the coolant in the engine 1 increases and decreases by mixing coolant of a different temperature, the temperature increase and decrease occurs in a temperature range that is lower than the warm-up determination value of the engine 1. This avoids a situation in which control for before warm-up completion and control for after warm-up completion are repeatedly and alternately executed.

Fig. 2 shows the engine coolant circulation and operational conditions of the valve 7 and the thermostat 5 in correspondence to the warm-up state of the engine 1 in the vehicle cooling apparatus of the present embodiment. As shown in the drawing, when the engine 1 is cold, the valve 7 and the thermostat 5 are closed, and the circulation of the coolant in the engine 1 is stopped. When the engine 1 is in a semi-warm-up state, the valve 7 opens, and the circulation of the coolant in the engine 1 is started. Further, after the engine 1 is warmed up, the thermostat 5 opens and the radiator 4 is activated to radiate heat from the coolant.

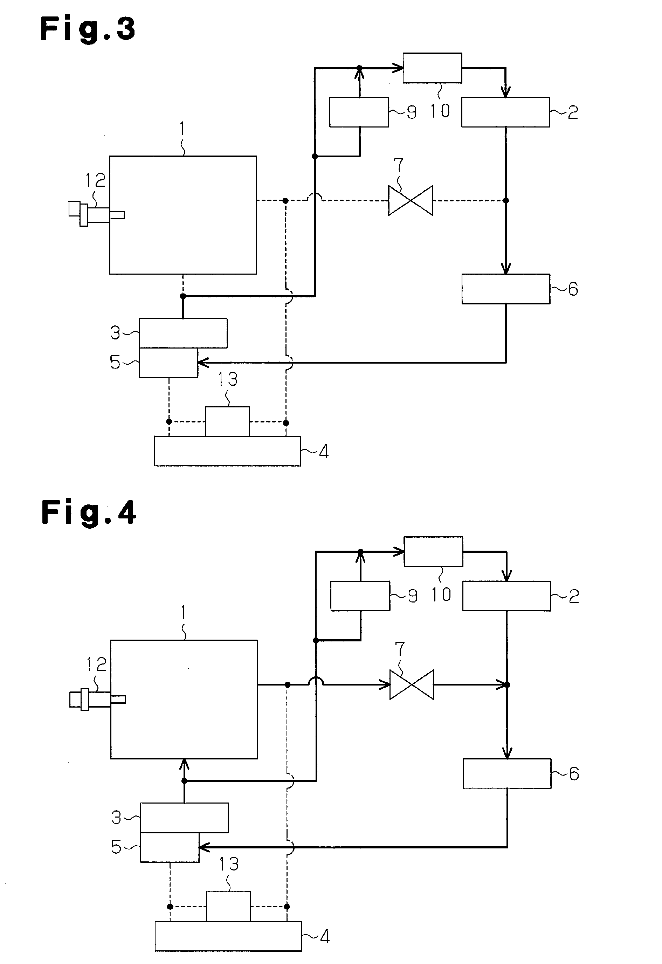

Fig. 3 shows the flow of coolant when the engine 1 is cold. In this state, the valve 7 and the thermostat 5 are both closed. Thus, in this state, coolant circulates only in the second coolant circuit as shown in the drawing. More specifically, coolant is circulated in this state from the water pump 3 through the throttle body 9, the EGR cooler 10, the exhaust heat recovery device 2, the heater core 6, and the thermostat 5, and the circulation of coolant in the engine 1 is stopped.

Fig. 4 shows the flow of coolant when the engine 1 is in the semi-warm-up state. In this state, the valve 7 opens, and the circulation of coolant through the engine 1 starts. Accordingly, the coolant passing through the engine 1 passes through the open valve 7 and mixes with the coolant flowing through the second coolant circuit at the upstream side of the heater core 6.

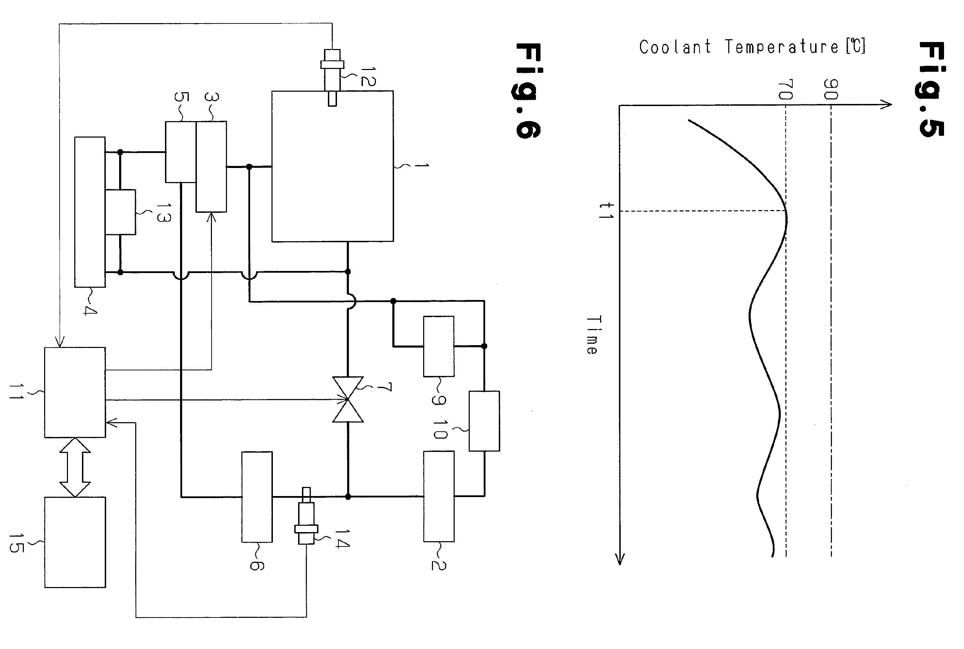

Fig. 5 shows the transition of the coolant temperature in the engine 1 before and after the valve 7 opens. In the vehicle cooling apparatus of the present embodiment, the coolant of the first coolant circuit is mixed with the coolant of the second coolant circuit when the coolant temperature of the engine 1 becomes greater than or equal to the semi-warm-up determination value, which is set to a temperature (for example, 70°C) that is lower than the warm-up completion determination value (for example, 90°C) of the engine 1. Thus, even if the coolant temperature of the second coolant circuit is low in this state and the coolant temperature in the engine 1 increases and decreases when mixed, the temperature increase and decrease occurs in a temperature range that is sufficiently lower than the warm-up completion determination value of the engine 1, as shown in the drawing.

The present embodiment has the advantages described below.
(1) In the present embodiment, the coolant of the first coolant circuit is mixed with the coolant of the second coolant circuit when the temperature of the coolant in the engine 1 detected by the coolant temperature sensor 12 becomes greater than or equal to the semi-warm-up determination value, which is set to a temperature that is lower than the warm-up completion determination value of the engine 1. In other words, in the present embodiment, the coolant of the first coolant circuit is mixed with the coolant of the second coolant circuit when the temperature of the coolant in the engine 1 detected by the coolant temperature sensor 12 becomes greater than or equal to the semi-warm-up determination value, which is set to a temperature that is lower than the temperature when the radiator 4 is activated. Thus, even if the coolant of the second coolant circuit, which has the lower temperature, is mixed with the coolant of the first coolant circuit and increases and decreases the temperature of the coolant in the engine 1, the temperature increase and decrease occurs in the temperature range that is lower than the warm-up completion determination value of the engine 1. This avoids a situation in which control for before warm-up completion and control for after warm-up completion are repeatedly and alternately executed. Thus, in the vehicle cooling apparatus of the present embodiment, when the coolant temperature is increased separately by the heat generated by the engine 1 and the heat recovered by the exhaust heat recovery device 2 from the in-vehicle heat source, control based on the coolant temperature is executed without any trouble even when mixing the coolant from the engine 1 and the coolant from the exhaust heat recovery device 2, the temperatures of which are separately increased.
(2) In the present embodiment, the flow amount of the coolant passing through the engine 1 is set to 0 until the coolants are mixed as described above. In other words, the circulation of the coolant in the engine 1 is stopped until the engine 1 is semi-warmed up. In such a case, the temperature of the coolant in the engine 1 rises quickly. Thus, the temperature of the coolant from the engine 1 often becomes higher than the temperature of the coolant from the exhaust heat recovery device 2. In this regard, in the present embodiment, the coolant from the engine 1 is mixed with the coolant from the exhaust heat recovery device 2 sufficiently before the temperature of the coolant in the engine 1 reaches the warm-up completion determination value. This prevents the coolant temperature from increasing and decreasing around the warm-up completion determination value of the engine 1.

### Second Embodiment

A cooling apparatus for a vehicle according to a second embodiment of the present invention will now be described with reference to Figs. 6 to 13.

When the coolant temperatures are increased independently at the engine 1 and at the exhaust heat recovery device 2 as described above, the temperatures of the two coolants may deviate from each other. Even in such a case, engine control that is based on the coolant temperature may be executed in a preferable manner based on the detection result of the coolant temperature sensor 12, which is arranged in the engine 1. However, heater control or the like, in which the temperature of the coolant flowing into the heater core 6 is important, cannot be appropriately executed when referring to the detection result of the coolant temperature sensor 12. Accordingly, in the vehicle cooling apparatus of the present embodiment, heater control or the like is executed in a preferable manner using two coolant temperature sensors, namely, a first coolant temperature sensor that detects the coolant temperature of the first coolant circuit, more specifically, the temperature of the coolant in the engine 1, and a second coolant temperature sensor that detects the coolant temperature of the second coolant circuit.

Further, in the present embodiment, the temperature detected by the second coolant temperature sensor is also used to determine whether or not the coolant of the first coolant circuit is mixed with the coolant of the second coolant circuit. Specifically, when the temperature of the coolant of the second coolant circuit is sufficiently high, the warm-up of the engine 1 is enhanced by opening the valve 7 to mix the coolant from the exhaust heat recovery device 2 having the higher temperature with the coolant from the engine 1. Further, even when the recovery of the exhaust heat cannot be sufficiently performed and the coolant temperature of the second coolant circuit does not reach the temperature required to heat the passenger compartment, the valve 7 may open to mix the coolants from the engine 1 and the exhaust heat recovery device 2 and use the heat directly received from the engine 1 in the engine 1 for heating.

Fig. 6 shows a structure of the coolant circuit in the vehicle cooling apparatus of the present embodiment. As shown in the drawing, the vehicle cooling apparatus of the present embodiment basically has the same structure as the coolant circuit of the first embodiment. However, in the present embodiment, a controller for the vehicle includes a second coolant temperature sensor 14 that detects the temperature of the coolant flowing into the heater core 6 at the upstream side of the heater core 6.

Further, in addition to the engine cooling control unit 11, the vehicle controller of the present embodiment includes an air conditioning control unit 15, which serves as an electronic control unit that controls air conditioning of the passenger compartment, specifically, the heating of the air with the heater core 6 and the blowing of the heated air into the passenger compartment. The air conditioning control unit 15 includes a CPU, ROM, RAM, and I/O in the same manner as the engine cooling control unit 11. The air conditioning control unit 15 and the engine cooling control unit 11 are connected to each other through an in-vehicle network (CAN) and share necessary information through intercommunication.

In the vehicle cooling apparatus of the present embodiment, a pump flow amount is control in correspondence with requests from the devices arranged in the cooling apparatus, namely, the engine 1, the exhaust heat recovery device 2, the heater core 6, the throttle body 9, and the EGR cooler 10. The pump flow amount control of the present embodiment will first be described.

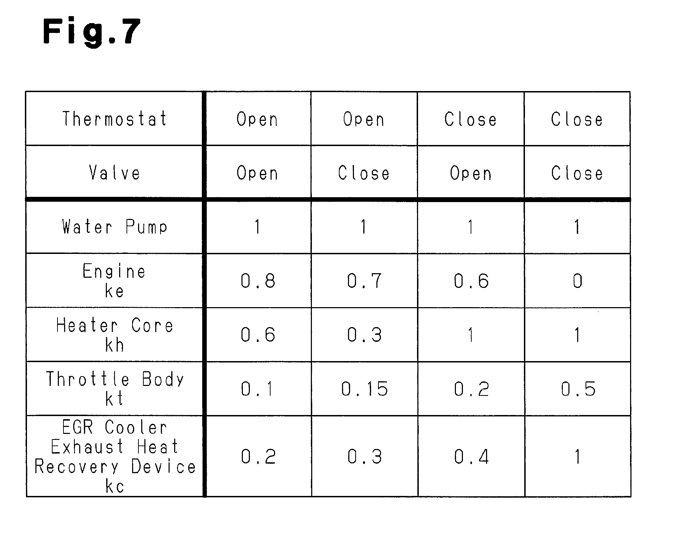

Fig. 7 shows one example for setting a flow amount distribution factor map, which is used in pump flow amount control. The flow amount distribution factor map shows the ratio of the flow amount of the coolant that flows in each device based on when the pump flow amount is 1. In this case, the flow amount ratio of the coolant flowing through each device changes in accordance with the operational conditions of the thermostat 5 and the valve 7. The flow amount ratio of each device under each operational condition of the thermostat 5 and the valve 7 is shown in the map. For example, a flow amount ratio ke of the engine 1 when the thermostat 5 and the valve 7 are both open is 0.8, that is, 80% of the flow amount of the coolant discharged from the water pump 3 flows to the engine 1. Here, a flow amount ratio kh of the heater core 6 is 0.6, a flow amount ratio kt of the throttle body 9 is 0.1, and a flow amount ratio kc of the EGR cooler 10 and the exhaust heat recovery device 2 is 0.2.

By determining a flow amount of the coolant which a certain device requires and dividing the flow amount of the coolant by the flow amount ratio of the device in correspondence with the operation condition of the thermostat 5 and the valve 7, the pump flow amount that can obtain the flow amount of the coolant required by the device can be determined. For example, when the engine 1 requires a flow amount q of the coolant in a state in which the thermostat 5 and the valve 7 are both open, a value (q/0.8) obtained by dividing the flow amount q of the coolant by the present flow amount ratio 0.8 of the engine 1 is the pump flow amount that satisfies the request of the engine 1.

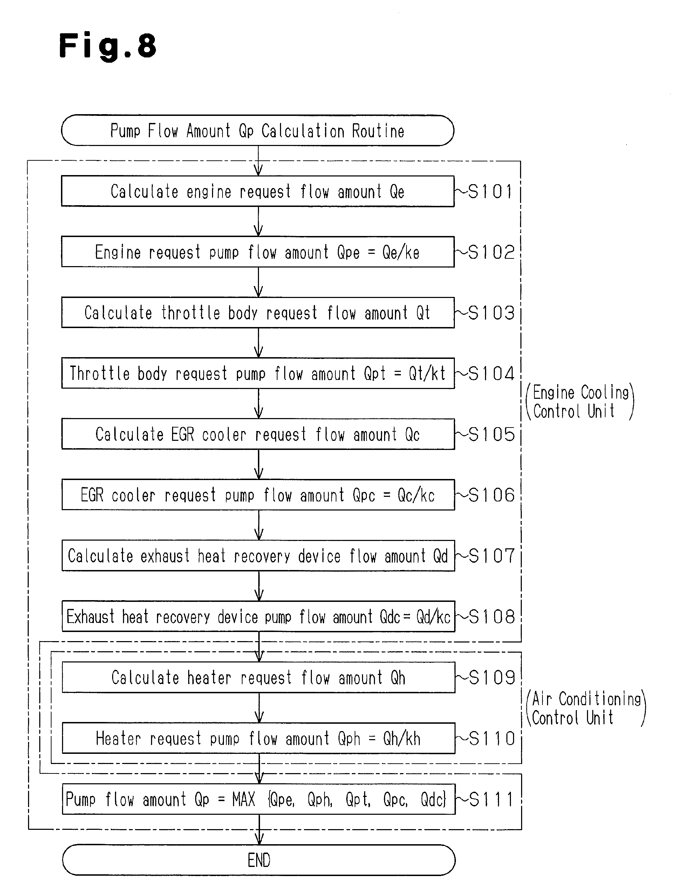

Fig. 8 shows the processing procedures of a pump flow amount calculation routine employed by the vehicle controller of the present embodiment. This is cyclically repeated in scheduled interruptions. The processing of steps S101 to S108 and step S111 of the routine are executed by the engine cooling control unit 11, and the processing of steps S109 and S110 are executed by the air conditioning control unit 15.

When the present routine is started, in step S101, the engine cooling control unit 11 first calculates the flow amount of the coolant required by the engine 1, or engine request flow amount Qe. Next, in step S102, the engine cooling control unit 11 calculates a value obtained by dividing the engine request flow amount Qe by the flow amount ratio ke of the engine 1 in correspondence with the present operation conditions of the thermostat 5 and the valve 7 as an engine request pump flow amount Qpe.

Subsequently, in step S103, the engine cooling control unit 11 calculates a flow amount of the coolant required by the throttle body 9, that is, a throttle body request flow amount Qt. Further, in step S104, the engine cooling control unit 11 calculates a value obtained by dividing the throttle body request flow amount Qt by the flow amount ratio kt of the throttle body 9 in correspondence with the present operation conditions of the thermostat 5 and the valve 7 as a throttle body request pump flow amount Qpt.

In step S105, the engine cooling control unit 11 calculates a flow amount of the coolant required by the EGR cooler 10, or an EGR cooler request flow amount Qc. In step S106, the engine cooling control unit 11 calculates a value obtained by dividing the EGR cooler request flow amount Qc by the flow amount ratio kc of the EGR cooler 10 in correspondence with the present operational conditions of the thermostat 5 and the valve 7 as an EGR cooler request pump flow amount Qpc.

In step S107, the engine cooling control unit 11 calculates a flow amount of the coolant required by the exhaust heat recovery device 2, or an exhaust heat recovery device request flow amount Qd. Further, in step S108, the engine cooling control unit 11 calculates a value obtained by dividing the exhaust heat recovery device request flow amount Qd by the flow amount ratio kc of the exhaust heat recovery device 2 in correspondence with the present operational conditions of the thermostat 5 and the valve 7 as an exhaust heat recovery device request pump flow amount Qpd.

In step S109, the air conditioning control unit 15 calculates a flow amount of the coolant required by the heater core 6, or a heater core request flow amount Qh. Further, in step S110, the air conditioning control unit 15 calculates a value obtained by dividing the heater core request flow amount Qh by the flow amount ratio kh of the heater core 6 in correspondence with the present operational conditions of the thermostat 5 and the valve 7 as a heater core request pump flow amount Qph. The air conditioning control unit 15 sends the heater core request pump flow amount Qph, calculated in such a manner, to the engine cooling control unit 11.

In this manner, when the request pump flow amount of each device is calculated as described above, in step S111, the engine cooling control unit 11 calculates the maximum value of the calculated request pump flow amount for each device as a pump flow amount Qp.
Further, the engine cooling control unit 11 controls the water pump 3 to obtain the calculated pump flow amount Qp.

The opening and closing control of the valve 7 in the vehicle cooling apparatus of the present embodiment will now be described. In the vehicle cooling apparatus of the present embodiment, each of the engine cooling control unit 11 and the air conditioning control unit 15 independently determines a request for opening and closing the valve 7. In other words, in the present embodiment, the engine cooling control unit 11 determines the request for opening and closing the valve 7 in correspondence with the actual situation of the engine 1, and the air conditioning control unit 15 determines the request for opening and closing the valve 7 in correspondence with the actual situation of an air conditioner. Further, in the present embodiment, the valve 7 is closed only when the air conditioning control unit 15 and the engine cooling control unit 11 both request valve closing of the valve 7. In other words, in the present embodiment, the valve 7 opens when either one of the air conditioning control unit 15 or the engine cooling control unit 11 requests the valve opening.

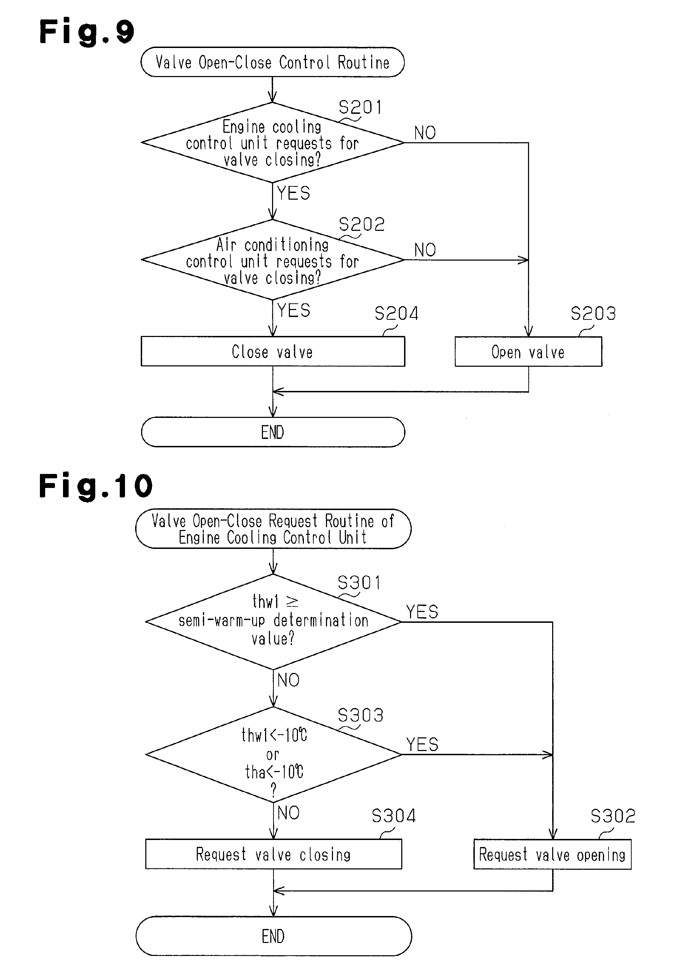

Fig. 9 shows a flowchart of a valve opening and closing control routine employed in the present embodiment. The processing of the present routine is cyclically repeated in scheduled interruptions by the engine cooling control unit 11. Prior to execution of the present routine, the engine cooling control unit 11 receives the request for opening and closing the valve 7 determined by the air conditioning control unit 15.

When the present routine starts, in step S201, the engine cooling control unit 11 determines whether or not itself is requesting closing of the valve 7. When the engine cooling control unit 11 is not requesting closing of the valve 7, that is, when the engine cooling control unit 11 is requesting closing of the valve 7 (NO in S201), the engine cooling control unit 11 proceeds to step S203 to instruct opening of the valve 7 in step S203 and then end the processing of the present routine.

Further, if the engine cooling control unit 11 is requesting closing of the valve 7 (YES in S201), the engine cooling control unit 11 proceeds to step S202 and determines in step S202 whether or not the air conditioning control unit 15 is requesting closing of the valve 7. In this case, when the air conditioning control unit 15 is not requesting closing of the valve 7, that is, when the air conditioning control unit 15 is requesting closing of the valve 7 (NO in S202), the engine cooling control unit 11 proceeds to step S203 to instruct opening of the valve 7 in step S203 and then end the processing of the present routine. When the air conditioning control unit 15 is requesting closing of the valve 7 (YES in S202), that is, when the engine cooling control unit 11 and the air conditioning control unit 15 both request closing of the valve 7, the engine cooling control unit 11 proceeds to step S204 to instruct the closing of the valve 7 in step S204 and then end the processing of the present routine.

Fig. 10 is a flowchart of a valve opening and closing request routine related with the determination of the opening and closing request of the valve 7 by the engine cooling control unit 11. Processing of the present routine is executed by the engine cooling control unit 11 prior to the processing of the valve opening and closing control routine.

When the present routine is started, in step S301, the engine cooling control unit 11 first determines whether or not a coolant temperature thw1 of the engine 1, which is detected by the coolant temperature sensor 12, is greater than or equal to the semi-warm-up determination value. In this case, when the coolant temperature thw1 is greater than or equal to the semi-warm-up determination value (YES in S301), the engine cooling control unit 11 proceeds to step S302 to request opening of the valve 7 in step S302 and then ends processing of the present routine.

When the coolant temperature thw1 is less than the semi-warm-up determination value (NO in S301), the engine cooling control unit 11 proceeds to step S303 to determine in step S303 whether or not at least either one of the coolant temperature thw1 and an ambient air temperature tha is less than -10°C. When at least either one of the coolant temperature thw1 and the ambient air temperature tha is less than -10°C (YES in S303), the engine cooling control unit 11 also proceeds to step S302 to request opening of the valve 7 in step S302 and ends the processing of the present routine. Further, when the coolant temperature thw1 and the ambient air temperature tha are both greater than or equal to -10°C (NO in S303), the engine cooling control unit 11 proceeds to step S304 to request closing of the valve 7 in step S304 and end the processing of the present routine.

In this manner, the present embodiment also mixes the coolant of the first coolant circuit with the coolant of the second coolant circuit by opening the valve 7 when the coolant temperature thw1 in the engine 1 becomes greater than or equal to the semi-warm-up determination value. Further, in the present embodiment, the coolant in the engine 1 is also circulated by opening the valve 7 in an extremely cold state when the coolant temperature thw1 and the ambient air temperature tha are less than -10°C. This is because of the following reasons. The throttle valve of the engine 1 may freeze under an extremely cold state. To avoid such a situation, the warmest possible coolant must be sent to the throttle body 9. Thus, in this case, in addition to the heat of the exhaust gas recovered by the exhaust heat recovery device 2, the exhaust heat of the engine 1 is sent to the throttle body 9 for preventing the freezing.

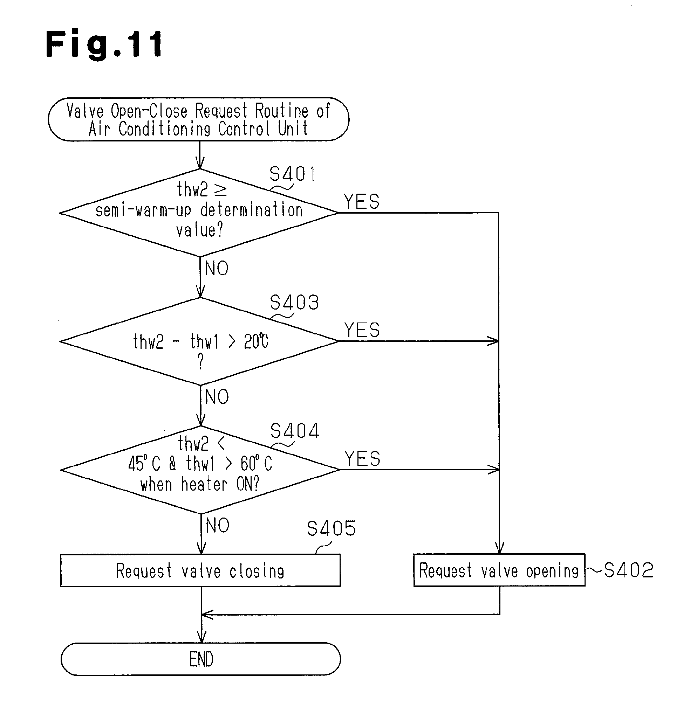

Fig. 11 shows a flowchart for a valve opening and closing request routine related with the determination of the opening and closing request of the valve 7 by the air conditioning control unit 15. The air conditioning control unit 15 processes the present routine before the valve opening and closing control routine is executed.

When the present routine is started, the air conditioning control unit 15 first determines in step S401 whether or not a coolant temperature thw2 of the second coolant circuit, which is detected by the second coolant temperature sensor 14, is greater than or equal to the semi-warm-up determination value. In this case, when the coolant temperature thw2 of the second coolant circuit is greater than or equal to the semi-warm-up determination value (YES in S401), the coolant of the second coolant circuit has been sufficiently warmed and thereby enhances warm-up of the engine 1 when sent to the engine 1. Thus, in this case, the air conditioning control unit 15 proceeds to step S402 to request opening of the valve 7 in step S402 and ends processing of the present routine.

When determined that the temperature of the coolant of the second coolant circuit is less than the semi-warm-up determination value (NO in S401), the air conditioning control unit 15 proceeds to step S403 and determines in step S403 whether or not the coolant temperature thw2 of the second coolant circuit is sufficiently higher than the coolant temperature thw1 in the engine 1. In this case, when the coolant temperature thw2 of the second coolant circuit is sufficiently higher than the coolant temperature thw1 in the engine 1 (YES in S403), the warm-up of the engine 1 can be enhanced by sending the coolant of the second coolant circuit to the engine 1. Accordingly, in this case, the air conditioning control unit 15 proceeds to step S402 to request valve opening of the valve 7 in step S402 and ends processing of the present routine. In the present embodiment, the valve 7 opens when the coolant temperature thw2 of the second coolant circuit is higher by 20°C or greater than the coolant temperature thw1 of the engine 1.

When the coolant temperature thw2 of the second coolant circuit is not sufficiently higher than the coolant temperature thw1 in the engine 1 (NO in S403), the air conditioning control unit 15 proceeds to step S404, and determines in step S404 whether or not the heater is ON, the coolant temperature thw2 of the second coolant circuit is less than 45°C, and the coolant temperature thw1 in the engine 1 is higher than 60°C. In this case, the coolant of the second coolant circuit is too low for warming air but the coolant in the engine 1 has a sufficiently high temperature. Thus, in this case, the air conditioning control unit 15 proceeds to step S402, sends the coolant having the high temperature from the engine 1 to the heater core 6 by requesting opening of the valve 7 in step S402, and obtains the necessary heating performance.

Further, when none of the above are satisfied, that is, when negative determinations are generated in each steps S401, S403, and S404, the air conditioning control unit 15 proceeds to step S405 to request closing of the valve 7 in step S405 and end processing of the present routine.

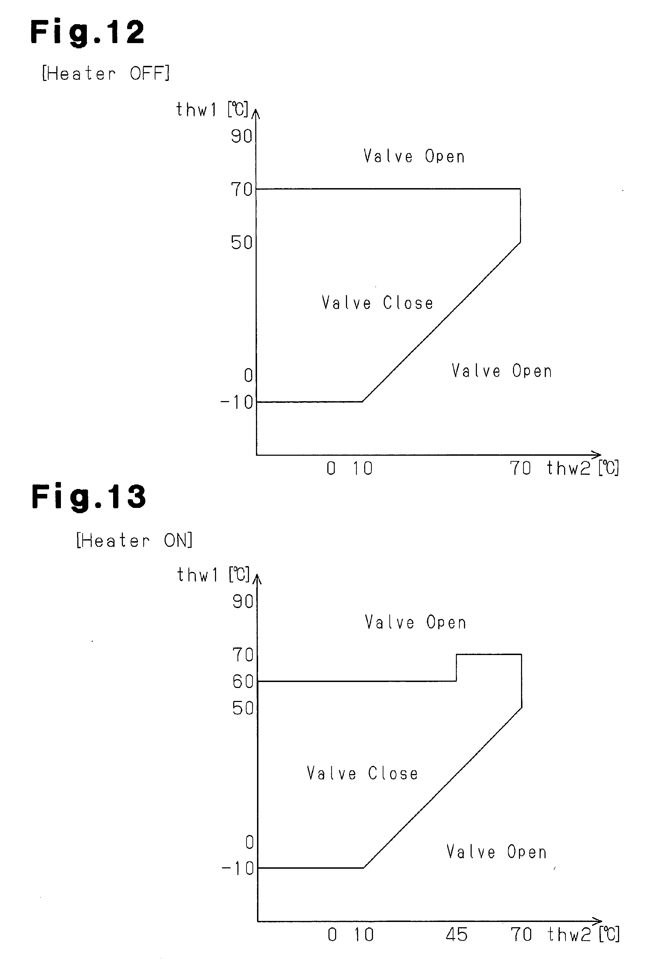

Fig. 12 shows the operational conditions of the valve 7 when the heater is deactivated in the vehicle cooling apparatus of the present embodiment. As shown in the drawing, when the heater is deactivated, the valve 7 opens when the coolant temperature thw1 in the engine 1 is greater than or equal to 70°C, which is the semi-warm-up determination value, and the coolant temperature thw2 of the second coolant circuit is greater than or equal to 70°C, which is also the semi-warm-up determination value. Further, the valve 7 also opens when the coolant temperature thw2 is higher by 20°C or greater than the coolant temperature thw1, and the coolant temperature thw1 is less than -10°C.

Fig. 13 shows the operational conditions of the valve 7 when the heater is activated in the vehicle cooling apparatus of the present embodiment. As shown in the drawing, when the heater is activated, the valve 7 also opens when the coolant temperature thw2 of the second coolant circuit is less than 45°C and the coolant temperature thw1 in the engine 1 is greater than 60°C.

In addition to advantages (1) and (2), the present embodiment has the advantages described below.
(3) The present embodiment uses two coolant temperature sensors, namely, the first coolant temperature sensor 12, which detects the temperature of the coolant of the first coolant circuit, that is, the coolant temperature thw1 in the engine 1, and the second coolant temperature sensor 14, which detects the temperature of the coolant of the second coolant circuit. As mentioned above, the vehicle cooling apparatus of the present embodiment is provided with two coolant circuits that increase the temperature of the coolant in different manners, and a deviation may occur in the temperatures of the coolants of the two coolant circuits. In such a case, as long as the two coolant temperature sensors mentioned above are provided, the temperature of the coolant in each coolant circuit can be recognized, and control can be executed in a preferable manner. For example, based on the detection result of the second coolant temperature sensor 14, control of a heater blower, control for avoiding boiling of the coolant in the exhaust heat recovery device, and the like may be executed in a preferable manner.
(4) The present embodiment is provided with the air conditioning control unit 15, which controls the heating of the air in the heater core 6 and the sending of the heated air into the passenger compartment, and the valve 7 is closed only when the air conditioning control unit 15 and the engine cooling control unit 11 both request closing of the valve 7. In this case, the request of both air conditioning control and engine cooling control may be reflected on the route selection of the coolant.
(5) In the present embodiment, the coolant temperature thw2 of the second coolant circuit detected by the second coolant temperature sensor 14 is used to determine whether or not to open the valve 7 and mix the coolant of the first coolant circuit with the coolant of the second coolant circuit. Specifically, the coolants of the first and second coolant circuits are also mixed when at least one of three conditions is satisfied. The three conditions are the coolant temperature thw2 detected by the second coolant temperature sensor 14 being greater than or equal to the semi-warm-up determination value, the coolant temperature thw2 detected by the second coolant temperature sensor 14 being sufficiently higher than the coolant temperature thw1 of the engine 1, and the coolant temperature thw2 being lower than the temperature necessary for the heater core 6. Thus, when enhancing the warm-up of the engine 1 by sending the coolant of the second coolant circuit to the engine 1 or when heating can not be sufficiently performed with only the heat recovered by the exhaust heat recovery device 2, the valve 7 opens and mixes the coolant of the engine 1 with the coolant of the second coolant circuit. Accordingly, in the present embodiment, enhancement of the warm-up of the engine 1 and the heating performance of the engine 1 are ensured.

### Third Embodiment

In each of the embodiments, the valve 7, which sets the flow amount of the coolant passing through the engine 1 to 0 when closed and mixes the coolant of the first coolant circuit with the coolant of the second coolant circuit when open, is formed by an ON-OFF valve. In this case, other types of valves such as a three-way valve or the like may be used in lieu of the valve 7.

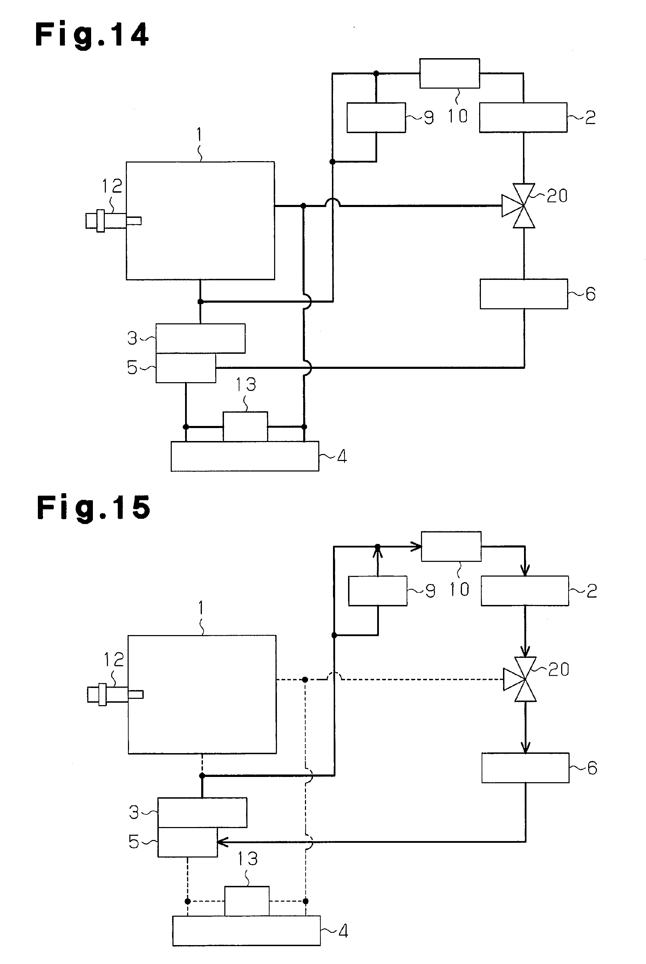

Fig. 14 shows the structure of a coolant circuit in the cooling apparatus of the vehicle in which a three-way valve 20 is used in lieu of the valve 7. As shown in the drawing, in the cooling apparatus, the three-way valve 20 is arranged at the upstream side of the heater core 6 at a junction of the bypass route of the first coolant circuit and the second coolant circuit. The three-way valve 20 is configured so that it can switch between a state in only the flow of coolant from the exhaust heat recovery device 2 to the heater core 6 is allowed and a state in which the flow of coolant from the engine 1 through the bypass route to the heater core 6 is allowed in addition to the flow of coolant from the exhaust heat recovery device 2. Further, the three-way valve 20 is controlled to allow the flow of coolant from only the exhaust heat recovery device 2 to the heater core 6 when the engine 1 is cold and also allow the flow of coolant through the bypass route when the coolant temperature in the engine 1 becomes greater than or equal to the semi-warm-up determination value.

Fig. 15 shows the flow of coolant when the engine 1 is cold. As shown in the drawing, the three-way valve 20 in this state is operated to allow only the flow of coolant from the exhaust heat recovery device 2 to the heater core 6. Accordingly, in this state, only the circulation of the coolant through the second coolant circuit is allowed, and the circulation of coolant in the first coolant circuit is stopped. Thus, the coolant remains in the engine 1 in this state, and the temperature of the coolant in the engine 1 increases at an early stage. This warms up the engine 1 at an early stage.

Fig. 16 shows the flow of the coolant when the engine 1 is semi-warmed up. As shown in the drawing, the three-way valve 20 in this state is operated to allow the coolant of the first coolant circuit to flow through the bypass route, in addition to allow the flow of coolant from the exhaust heat recovery device 2 to the heater core 6, that is, the circulation of the coolant of the second coolant circuit. Thus, in this state, the coolant of the first coolant circuit is mixed with the coolant of the second coolant circuit.

The vehicle cooling apparatus of the present embodiment, which employs such a three-way valve, also mixes the coolant of the first coolant circuit with the coolant of the second coolant circuit when the temperature of the coolant in the engine 1 detected by the coolant temperature sensor 12 becomes greater than or equal to the semi-warm-up determination value, which is set to a temperature that is lower than the warm-up completion determination value of the engine 1. Thus, even when the coolant of the second coolant circuit having the lower temperature is mixed with the coolant of the first coolant circuit and the temperature of the coolant in the engine 1 is increased or decreased, the increase and decrease of the temperature occurs in a temperature range that is lower than the warm-up completion determination value of the engine 1. This avoids a situation in which control for before warm-up completion and control for after warm-up completion are repeatedly and alternately executed. Thus, in the vehicle cooling apparatus of the present embodiment, when the coolant temperature is increased independently by the heat generated by the engine 1 and the heat recovered by the exhaust heat recovery device 2 from the in-vehicle heat source, control based on the coolant temperature is executed without any trouble even when mixing the coolant from the engine 1 and the coolant from the exhaust heat recovery device 2, the temperatures of which are independently increased.

The embodiments described above may be modified as described below.

In the second embodiment, the air conditioning control unit 15 is configured to request closing of the valve 7 when all three conditions are not satisfied. The three conditions are the coolant temperature thw2 of the second coolant circuit being greater than or equal to the semi-warm-up determination value of the engine 1, the coolant temperature thw2 being sufficiently higher than the coolant temperature of the engine 1, and the coolant temperature thw2 being lower than the temperature necessary for the heater core 6. The conditions for requesting closing of the valve 7 is not limited in such a manner and may be changed as required.

The second embodiment uses the coolant temperature thw2 of the second coolant circuit detected by the second coolant temperature sensor detects in addition to the coolant temperature thw1 of the engine 1 to determine whether or not the coolant of the first coolant circuit is mixed with the coolant of the second coolant circuit. However, when the it is not important that the heating performance be ensured prior to warm-up completion of the engine 1 or when the heater is turned off, the mixing of the coolant may be determined based on only the coolant temperature thw1 in the engine 1.

In the second embodiment, one condition for opening the valve 7, that is, mixing the coolants of the first and second coolant circuits is the coolant temperature of the second coolant circuit detected by the second coolant temperature sensor 14 being lower than the temperature necessary for the heater core 6. In this case, depending on the structure of the vehicle cooling apparatus, the heat recovered by the exhaust heat recovery device 2 may be sent to a heat utilizing device other than the heater core 6. In such a case, the temperature detected by the second coolant temperature sensor 14 being lower than the temperature necessary for the heat utilizing device that utilizes the heat of the coolant requires may be set as a condition for mixing the coolants of the first and second coolant circuits. This ensures the heat amount required for the heat utilizing device by supplying the heat of the engine 1 when the coolant temperature of the second coolant circuit is insufficient.

In the embodiments described above, to enhance the warm-up of the engine 1, the circulation amount of the coolant in the engine 1 is set to 0 when the engine 1 is cold. However, a certain warm-up enhancement effect may be obtained without completely stopping the circulation of the coolant in the engine 1 as long as the amount of circulation is decreased to a certain level. This would also increase the temperature of the coolant in the engine 1 at an earlier stage than the coolant of the second coolant circuit and may thereby interfere with control based on the coolant temperature after the coolants of the first and second coolant circuits are mixed. Accordingly, the application of the present invention in such a case would also obtain preferable advantages. Further, even when the circulation of the coolant is not stopped or decreased when the engine 1 is cold, the temperature of coolant from the engine 1 may be increased more quickly than the temperature of the coolant from the exhaust heat recovery device 2 depending on the recovery conditions of the exhaust heat of the exhaust heat recovery device 2 and the usage conditions of the recovered heat. Thus, in such a case, the application of the present invention may obtain preferable advantages.

Any device functioning to recover the heat of exhaust gas and increase the temperature of the coolant may be used as the exhaust heat recovery device 2 in the above embodiments. For example, an EGR cooler, which cools the exhaust gas recirculated to the intake air with coolant, a dedicated coolant passage, which cools an exhaust manifold, and the like may be used as the exhaust heat recovery device 2.

In the embodiments described above, the exhaust heat recovery device 2 recovers heat from the exhaust gas of the engine 1 to increase the temperature of the coolant. However, the mixing of the coolants of the first and second coolant circuits also interferes with control based on the coolant temperature when recovering exhaust heat from an in-vehicle heat source instead of the heat of the exhaust gas of the engine 1 to increase the temperature of the coolant. More specifically, when increasing the temperature of coolant with the exhaust heat of the in-vehicle heat source recovered by the exhaust heat recovery device 2 in addition to separately increasing the temperature of coolant with the heat directly received from the engine 1, a deviation in temperature occurs between the coolants of which temperatures are independently increased. Further, when the temperature of the coolant from the engine 1 increases more quickly than the coolant from the exhaust heat recovery device 2, variations may occur in the temperature distribution of the coolant flowing through the engine 1. This may interfere with control that is based on the coolant temperature after coolants are mixed. In such a case, the application of the present invention would obtain preferable advantages.

The structure of the coolant circuit in the above embodiments may be changed as required. More specifically, the present invention may be applied as long as the cooling apparatus of the vehicle includes a first coolant circuit, which extends through the engine 1 and circulates the coolant, and a separate second coolant circuit, which extends through a exhaust heat recovery device that recovers exhaust heat from an in-vehicle heat source to heat the coolant passing therethrough and circulate the coolant.

### DESCRIPTION OF REFERENCE CHARACTERS

1: engine, 2: exhaust heat recovery device, 3: water pump, 4: radiator, 5: thermostat, 6: heater core (heat utilizing device), 7: valve, 9: throttle body, 10: EGR cooler, 11: engine cooling control unit, 12: coolant temperature sensor (first coolant temperature sensor), 13: reservoir tank, 14: second coolant temperature sensor, 15: air conditioning control unit, 20: three-way valve (valve).

## Claims

1. A cooling apparatus for a vehicle including an engine and a heat source, the cooling apparatus comprising:
a first coolant circuit that extends through the engine and circulates coolant;
an exhaust heat recovery device that recovers exhaust heat of the heat source and heats coolant passing therethrough;
a second coolant circuit that extends through the exhaust heat recovery device and circulates coolant; and
a coolant temperature sensor that detects the temperature of the coolant in the engine,
wherein the coolant of the first coolant circuit is mixed with the coolant of the second coolant circuit when the temperature detected by the coolant temperature sensor becomes greater than or equal to a semi-warm-up determination value, which is set to a temperature that is lower than a warm-up completion determination value of the engine.

2. A cooling apparatus for a vehicle including an engine and a heat source, the cooling apparatus comprising:
a first coolant circuit that extends through the engine and circulates coolant;
an exhaust heat recovery device that recovers exhaust heat of the heat source and heats coolant passing therethrough;
a second coolant circuit that extends through the exhaust heat recovery device and circulates coolant; and
a radiator activated to radiate heat from the coolant that passes through the engine when the temperature of the coolant becomes greater than or equal to a specified value; and
a coolant temperature sensor that detects the temperature of the coolant in the engine,
wherein the coolant of the first coolant circuit is mixed with the coolant of the second coolant circuit when the temperature detected by the coolant temperature sensor becomes greater than or equal to a semi-warm-up determination value, which is set to a temperature that is lower than the temperature at which the radiator is activated.

3. The cooling apparatus for a vehicle according to claim 1 or 2, wherein a flow amount of the coolant passing through the engine is decreased or set to 0 until the mixing of the coolant is started.

4. A cooling apparatus for a vehicle including an engine and a heat source, the cooling apparatus comprising:
a first coolant circuit that extends through the engine and circulates coolant;
an exhaust heat recovery device that recovers exhaust heat of the heat source and heats coolant passing therethrough;
a second coolant circuit that extends through the exhaust heat recovery device and circulates coolant;
a radiator activated to radiate heat from the coolant that passes through the engine when the temperature of the coolant becomes greater than or equal to a specified value;
a bypass passage that circulates coolant bypassing the radiator;
a valve that decreases a flow amount of the coolant passing through the engine or sets the flow amount to 0 when closed and mixes the coolant of the first coolant circuit with the coolant of the second coolant circuit when open; and
a coolant temperature sensor that detects the temperature of the coolant in the engine,
wherein the valve opens when the temperature detected by the coolant temperature sensor becomes greater than or equal to a semi-warm-up determination value, which is set to a temperature that is lower than the temperature at which the radiator is activated.

5. The cooling apparatus for a vehicle according to any one of claims 1 to 4, wherein the coolant temperature sensor is a first coolant temperature sensor that detects the temperature of the coolant in the first coolant circuit, and the cooling apparatus further comprises a second coolant temperature sensor that detects the temperature of the coolant in the second coolant circuit.

6. The cooling apparatus for a vehicle according to claim 5, wherein the temperature detected by the second coolant temperature sensor is used to determine whether or not to mix the coolant of the first coolant circuit with the coolant of the second coolant circuit.

7. The cooling apparatus for a vehicle according to claim 6, wherein the coolant of the first coolant circuit is mixed with the coolant of the second coolant circuit when at least one of three conditions is satisfied, which are the temperature detected by the second coolant temperature sensor being greater than or equal to the semi-warm-up determination value, the temperature detected by the second coolant temperature sensor being sufficiently higher than the temperature of the coolant in the engine, and the temperature detected by the second coolant temperature sensor being lower than the temperature required by a heat utilizing device, which utilizes the heat of the coolant.

8. A cooling apparatus for a vehicle including an engine and a heat source, the cooling apparatus comprising:
a first coolant circuit that extends through the engine and circulates coolant;
a heater core heating that heats air, which is sent into a passenger compartment, with heat of coolant flowing therethrough;
an exhaust heat recovery device that recovers exhaust heat of the heat source and heats coolant passing therethrough;
a second coolant circuit that extends through the heater core and the exhaust heat recovery device and circulates coolant;
a radiator activated to radiate heat from the coolant that passes through the engine when the temperature of the coolant becomes greater than or equal to a specified value;
a bypass passage that sends the coolant that has passed through the engine to the heater core bypassing the radiator;
a valve arranged in the bypass passage, wherein the valve blocks the flow of the coolant through the bypass passage when closed and allows the flow of the coolant through the bypass passage when open;
a coolant temperature sensor that detects the temperature of the coolant in the engine; and
an engine cooling control unit that requests the valve to close when the temperature detected by the coolant temperature sensor is less than a semi-warm-up determination value, which is set to a temperature that is lower than the temperature at which the radiator is activated, and requests the valve to open when the temperature detected by the coolant temperature sensor is greater than or equal to the semi-warm-up determination value.

9. The cooling apparatus for a vehicle according to claim 8, wherein the coolant temperature sensor is a first coolant temperature sensor that detects the temperature of the coolant in the first coolant circuit, and the cooling apparatus further comprises a second coolant temperature sensor that detects the temperature of the coolant in the second coolant circuit.

10. The cooling apparatus for a vehicle according to claim 9, further comprising an air conditioning control unit that controls heating of the air in the heater core and blowing of the heated air into the passenger compartment, wherein the valve is closed only when the air conditioning control unit and the engine cooling control unit both request the valve to close.

11. The cooling apparatus for a vehicle according to claim 10, wherein the air conditioning control unit requests the valve to close when all three conditions are unsatisfied, which are the temperature detected by the second coolant temperature sensor being greater than or equal to the semi-warm-up determination value, the temperature detected by the second coolant temperature sensor being sufficiently higher than the temperature of the coolant in the engine, and the temperature detected by the second coolant temperature sensor being lower than the temperature required by the heater core.
